# EUROPEAN PATENT SPECIFICATION

(11) **EP 2 650 963 B1**
(45) Date of publication and mention of the grant of the patent: **28.01.2015**
(21) Application number: 13159664.5
(22) Date of filing: 18.03.2013
(51) Int. Cl.: H04M 1/02, H01Q 1/24, H01Q 1/38, H01Q 5/00, H01Q 9/42, H01Q 13/10, H04M 1/22

(54) **Mobile device and manufacturing method thereof**
Mobile Vorrichtung und Herstellungsverfahren dafür
Dispositif mobile et son procédé de fabrication

(30) Priority: 09.04.2012 US 201213442644
(43) Date of publication of application: 16.10.2013
(73) Proprietor: HTC Corporation, Taoyuan County 330 (TW)
(72) Inventor: Chiu, Chien-Pin, Taoyuan 330 Taoyuan City (TW); Wu, Hsiao-Wei, Taoyuan 330 Taoyuan City (TW); Tsai, Tiao-Hsing, Taoyuan 330 Taoyuan City (TW); Wang, Ying-Chih, Taoyuan 330 Taoyuan City (TW)
(74) Representative: Harrasz, Julia Konstanze

(56) References cited:
- EP-A- 2 629 368
- EP-A2- 2 584 647
- TW-B- I 258 242
- US-B1- 7 546 114

## Description

### BACKGROUND

### Technical Field

The example of the subject application generally relates to a mobile device, and more particularly, relates to a mobile device for operation in multiple frequency bands.

### Description of the Related Art

With the progress of mobile communication technology, portable electronic devices, for example, portable computers, mobile phones, multimedia players, and other hybrid functional portable electronic devices, have become more common. To satisfy the demand of users, portable electronic devices usually can perform wireless communication functions. Some functions cover a large wireless communication area, for example, mobile phones using 2G, 3G, GPS and LTE (Long Term Evolution) systems and using frequency bands of 700MHz, 850MHz, 900MHz, 1800MHz, 1575MHz, 1900MHz, 2100MHz, 2300MHz, and 2500MHz. Some functions cover a small wireless communication area, for example, mobile phones using Wi-Fi, Bluetooth, and WiMAX (Worldwide Interoperability for Microwave Access) systems and using frequency bands of 2.4GHz, 3.5GHz, 5.2GHz, and 5.8GHz.

Traditionally, a metal element with a fixed size is used as a main body of an antenna. The metal element is half wavelength or one-fourth wavelength in length, wherein the wavelength corresponds to the desired frequency band. For durability and aesthetics, a mobile device has at least a part of the housing (e.g., the front, the back or the frame) that is made of metal. However, the metal housing has a bad impact on antenna radiation.

A patent publication TW 1258 242 discusses information that is useful for understanding the background of the invention.

### Brief Summary

The subject application is directed to a manufacturing method for producing an antenna and a mobile device, comprising the sequential steps of: providing a substrate; providing a ground element comprising a ground branch, wherein an edge of the ground element has a notch extending into the interior of the ground element to form a slot region, and the ground branch partially surrounds the slot region; disposing a radiating branch inside the slot region; and coupling the radiating branch to the ground branch of the ground element such that the ground branch and the radiating branch form an antenna structure.

### BRIEF DESCRIPTION OF DRAWINGS

The subject application can be more fully understood by reading the subsequent detailed description and examples with references made to the accompanying drawings, wherein:
FIG. 1 is a diagram for illustrating a mobile device according to an example;
FIG. 2 is a diagram for illustrating a mobile device according to an example;
FIG. 3 is a diagram for illustrating a substrate and objects thereon according to an example;
FIG. 4 is a diagram for illustrating a parallel feeding element according to an example;
FIG. 5 is a diagram for illustrating VSWR (Voltage Standing Wave Ratio) of the mobile device according to an embodiment of the invention;
FIG. 6A is a vertical view for illustrating the mobile device according to an example;
FIG. 6B is a side view for illustrating the mobile device according to an example;
FIG. 7A is a diagram for illustrating the internal structure of the mobile device according to an example;
FIG. 7B is a diagram for illustrating the internal structure of the mobile device according to an example;
FIG. 7C is a diagram for illustrating the internal structure of the mobile device according to an example and
FIG. 8 is a flowchart for illustrating a manufacturing method for producing an antenna and a mobile device according to an embodiment of the invention.

### Detailed Description

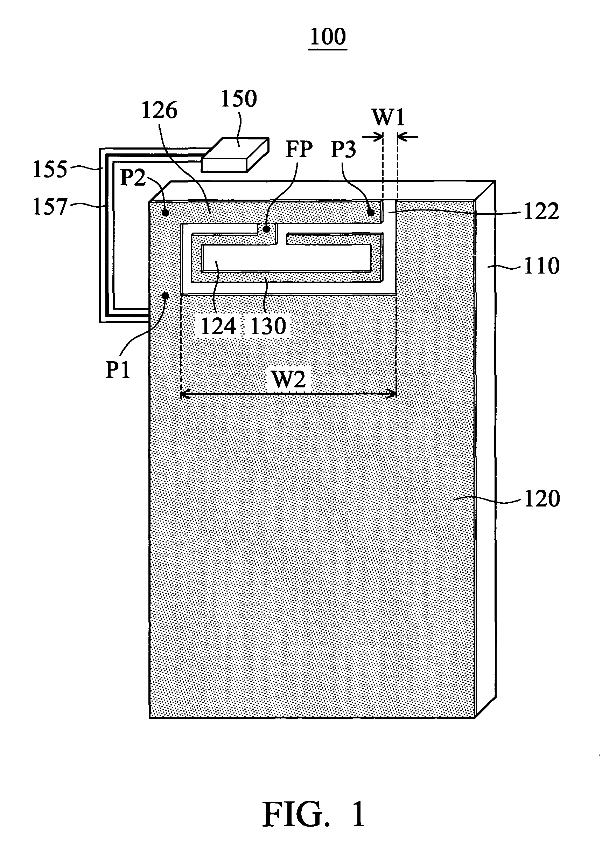

FIG. 1 is a diagram for illustrating a mobile device 100 according to an example. The mobile device 100 at least comprises a substrate 110, a ground element 120, a radiating branch 130, a processor, a display module, a touch-screen module, an input module, and other relative electronic components (not shown). The substrate 110 may be an FR4 substrate with a 4.3 dielectric constant. In an example, the substrate 110 is approximately 0.8mm in thickness. The ground element 120 and the radiating branch 130 are at least partially conductive. They may be made of metal, such as silver or copper, or may be coated on a carrier of the radiating branch 130 with conductive paint, such as LDS (Laser Direct Structuring). In an example, the ground element 120 is a plane layer disposed on the substrate 110.

The ground element 120 comprises a ground branch 126. An edge of the ground element 120 has a notch 122 which extends into the interior of the ground element 120 so as to form a slot region 124. The slot region 124 substantially has a rectangular shape. With respect to the real structure, the edge of the ground element 120 is partially open. The length W2 of the slot region 124 is greater than the length W1 of the notch 122. The length W1 of the notch 122 is approximately from 0.3mm to 2mm. In a preferred embodiment, the length W1 of the notch 122 is approximately 0.6mm. The ground branch 126 partially surrounds the slot region 124. The radiating branch 130 is disposed on the substrate 110 or a carrier thereof. The radiating branch 130 is substantially inside the slot region 124, and is further electrically coupled to the ground branch 126 of the ground element 120.

The ground branch 126 and the radiating branch 130 form an antenna structure together, wherein a feeding point FP of the antenna structure may be electrically coupled to a signal source, and each of the ground branch 126 and the radiating branch 130 is a part of the current path. In an example, the radiating branch 130 substantially has a C-shape, and the ground branch 126 of the ground element 120 substantially has an L-shape. The length of the radiating branch 130 is greater than the length of the ground branch 126. Note that the radiating branch 130 may meander to form a variety of shapes, such as an L-shape or a W-shape. When an input signal is fed through the feeding point FB into the antenna structure, the radiating branch 130 is excited to form a low frequency band, and the ground branch 126 is excited to from at least a high frequency band. Therefore, the mobile device 100 can operate in multiple frequency bands.

In an example, the mobile device 100 further comprises a power button 150, an FPCB (Flexible Printed Circuit Board) 155, and a signal line 157. The power button 150 is disposed to be close to the ground branch 126 of the ground element 120. The signal line 157 is disposed on the FPCB 155, and is electrically coupled between the power button 150 and the substrate 110 so as to transmit a power signal. In other examples, the signal line 157 may be also electrically coupled to a volume button (not shown). Note that the signal line 157 and the FPCB 155 substantially extend along or around the ground branch 126 of the ground element 120. Since the signal line 157 and a resonant path of the antenna structure extend in the same direction, the antenna structure is not influenced much by the power button 150 and the signal line 157.

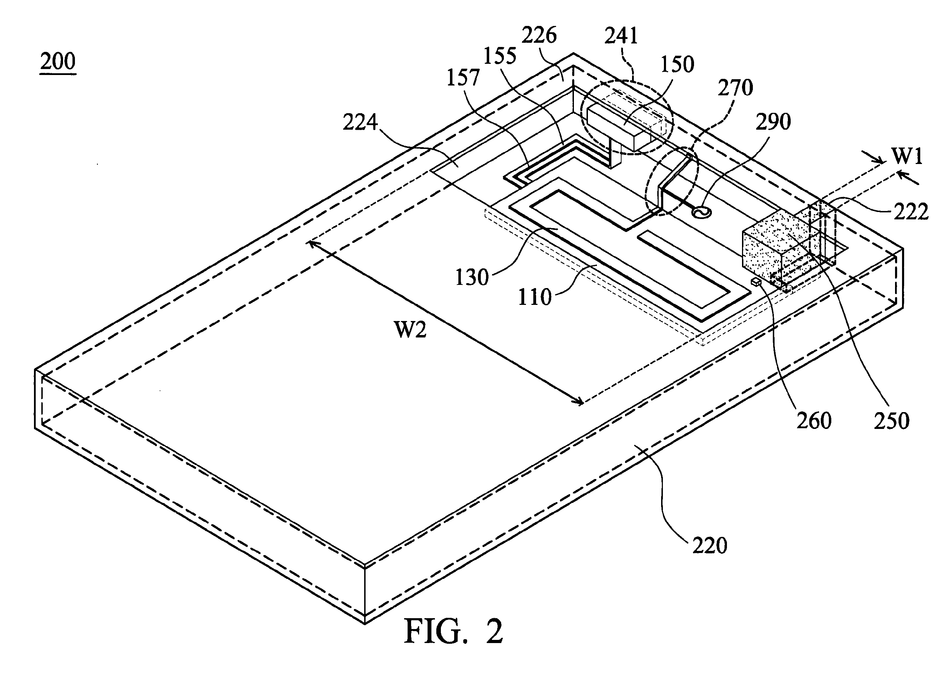

FIG. 2 is a diagram for illustrating a mobile device 100 according to an example. As shown in FIG. 2, the mobile device 100 at least comprises a substrate 110, a ground element 220, and a radiating branch 130. The mobile device 200 is similar to the mobile device 100 as shown in FIG. 1, and relatively similar components will not be described again hereafter. Note that, the ground element 220 is a conductive housing of the mobile device 200. The conductive housing has a hollow structure in which the substrate 110, the radiating branch 130 and other relative components are disposed. Note that the conductive housing may have different shapes (e.g., the conductive housing has openings with different sizes and shapes), and the openings can be formed in any part of the conductive housing. The ground element 220 and the radiating branch 130 are at least partially conductive, and are made of metal or coated on a carrier of the ground element 220 and the radiating branch 130 with conductive paint, such as LDS.

Similarly, the ground element 220 comprises a ground branch 226. An edge of the ground element 220 has a notch 222 which extends into the interior of the ground element 220 so as to form a slot region 224. The ground branch 226 partially surrounds the slot region 224. In some examples, the notch 222 of the ground element 220 is formed as follows: (1) from the front of the mobile device 100 to the side further to the back thereof; (2) from the side of the mobile device 100 to the back thereof; (3) from the front of the mobile device 100 to the side thereof; or (4) in one of the front, the side and the back of the mobile device 100. In an example, the length W1 of the notch 222 is approximately from 0.3mm to 2mm. The radiating branch 130 is disposed on the substrate 110 or a carrier thereof. The radiating branch 130 is substantially inside the slot region 224, and is further electrically coupled to the ground branch 226 of the ground element 220. The ground branch 226 and the radiating branch 130 form an antenna structure together, and each of the ground branch 226 and the radiating branch 130 is a part of the current path. The mobile device 200 may further comprise a parallel feeding element 270, wherein a signal source 290 is electrically coupled through the parallel feeding element 270 to the ground branch 226 and to the radiating branch 130, respectively. In the example, since the conductive housing of the mobile device 200 is a part of the antenna structure, communication of the mobile device is not influenced much by the conductive housing. In addition, the ground element 220 is implemented by the conductive housing so as to save from taking up too much design space for the antennas.

In an example, the mobile device 200 further comprises a power button 150, an FPCB (Flexible Printed Circuit Board) 155, and a signal line 157. The ground element 220 may have a button hole 241 in which the power button 150 may be disposed. Similarly, the signal line 157 and the FPCB 155 substantially extend along the ground branch 226 of the ground element 220 (i.e., in the direction toward the notch 222) so as to avoid interference with the antenna structure.

In an example, the mobile device 200 further comprises a transparent nonconductive structure 250 and an LED (Light Emitting Diode) 260. The transparent nonconductive structure 250 comprises at least an optical plane (not shown), and is partially embedded into the notch 222 of the ground element 220 so as to separate the ground element 220 from the open end of the ground branch 226. The LED 260 is disposed on the substrate 110 and generates light through the transparent nonconductive structure 250. In an example, the light may blink in connection with the optical plane so as to have functions of indicating, reminding, and delivering signals. The LED 260 may be electrically coupled to a processor (not shown) of the mobile device 200, wherein the processor is configured to control the light condition of the LED 260.

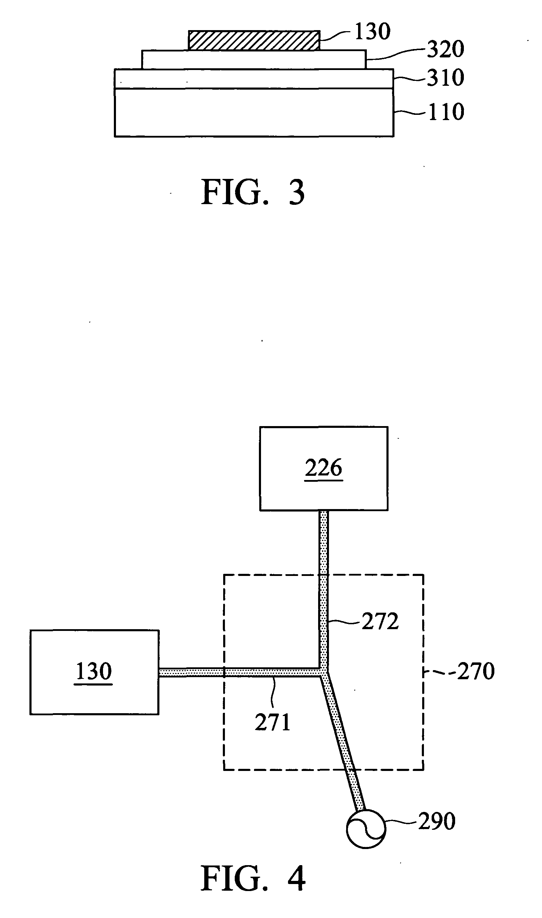

FIG. 3 is a diagram for illustrating the substrate 110 and objects thereon according to an example. As shown in FIG. 3, the mobile device 200 further comprises a plastic carrier 310 and an antenna FPCB (Flexible Printed Circuit Board) 320. The plastic carrier 310 is supported by the substrate 110, and the antenna FPCB 320 is disposed on the plastic carrier 310. The plastic carrier 310 can support the antenna FPCB 320. In the embodiment, the radiating branch 130 is disposed on the antenna FPCB 320, and has a variable shape. In other examples, the radiating branch 130 is coated on the plastic carrier 310 or other components (e.g., PCB, Printed Circuit Board) with LDS technology.

FIG. 4 is a diagram for illustrating the parallel feeding element 270 according to an example. As shown in FIG. 4, the parallel feeding element 270 comprises two connection elements 271 and 272, wherein the connection element 271 is electrically coupled between the radiating branch 130 and the signal source 290, and the connection element 272 is electrically coupled between the ground branch 226 and the signal source 290. In an example, the connection elements 271 and 272 are two metal springs or two pogo pins. In another example, the connection element 271 is a metal trace, and the connection element 272 is a metal spring or a pogo pin. The parallel feeding element 270 is designed to use internal space of the mobile device 200 effectively.

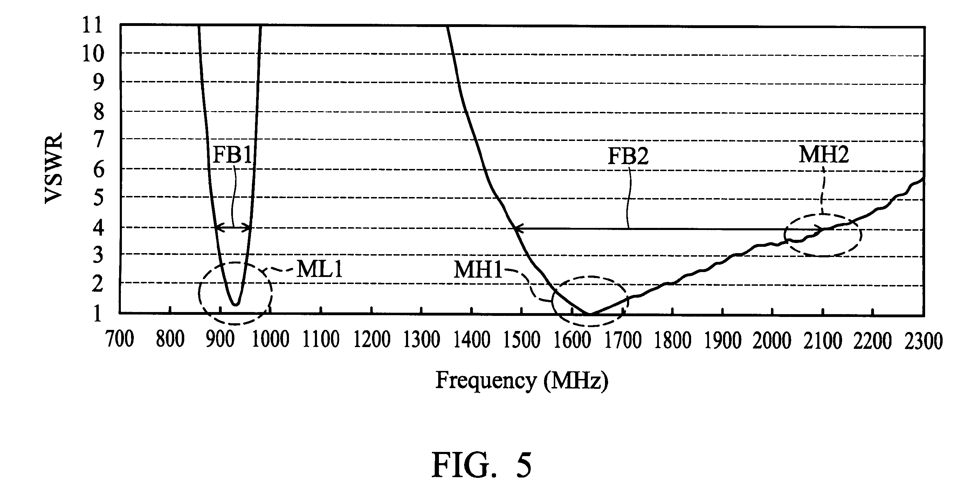

FIG. 5 is a diagram for illustrating VSWR (Voltage Standing Wave Ratio) of the mobile device according to an example, wherein the vertical axis represents VSWR, and the horizontal axis represents operating frequency (unit: MHz). As shown in FIG. 5, the radiating branch 130 of the antenna structure is excited to generate a low frequency mode ML1 to form a low frequency band FB1, and the ground branch 226 (or 126) of the antenna structure is excited to generate at least two high frequency modes MH1 and MH2 to form a high frequency band FB2. More particularly, referring to FIG. 1, a first current path on the ground branch 126 (from P1 to P2 through FP to P3) is excited to generate a high frequency mode MH1, and a second current path on the ground branch 126 (from FP to P3) is excited to generate another high frequency mode MH2. Note that the point P1 is electrically coupled to the ground element 120, and the position of the point P1 is adjustable. The length of the radiating branch 130 and the length of the ground branch 226 (or 126) may be adjusted appropriately according to desired frequency bands. In an example, the low frequency band FB1 is approximately from 880MHz to 960MHz, and the high frequency band FB2 is approximately from 1428MHz to 2710MHz. Therefore, the mobile device of the invention can cover GSM900/Band 11/GPS/DCS1800/PCS1900/UMTS bands.

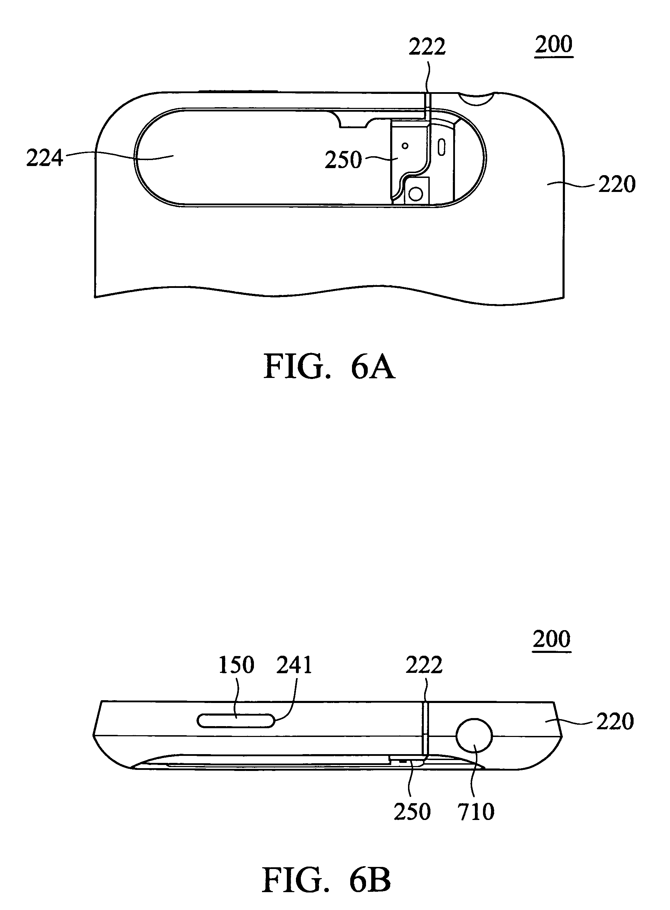

FIG. 6A is a vertical view for illustrating the mobile device 200 according to an example. As shown in FIG. 6A, the ground element 220 is a conductive housing, and the slot region of the ground element 220 substantially has a straight shape. The transparent nonconductive structure 250 is partially embedded into the notch 222 of the ground element 220, wherein the notch 222 opens from the front of the mobile device 200 to the side frame and further to the back. The slot region 224 can accommodate other components, such as a camera module, a light compensation module, a loudspeaker module, or a holder module.

FIG. 6B is a side view for illustrating the mobile device 200 according to an example. As shown in FIG. 6B, the power button 150 is disposed in the button hole 241 of the conductive housing. The conductive housing further has an earphone hole 710 to electrically couple earphones.

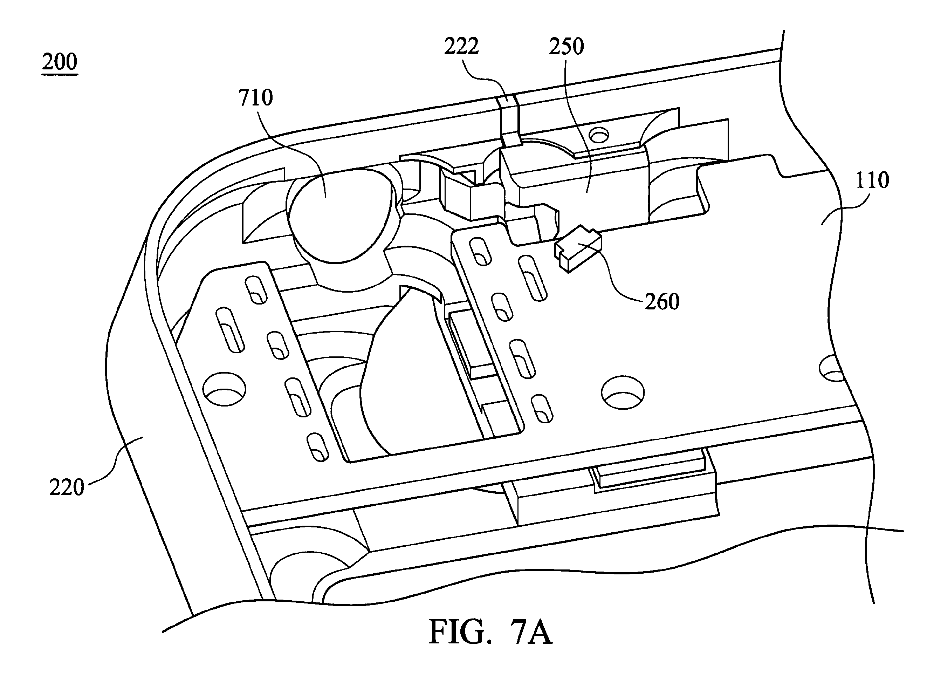

FIG. 7A is a diagram for illustrating the internal structure of the mobile device 200 according to an example. As shown in FIG. 7A, the substrate 110 may have an irregular shape. The transparent nonconductive structure 250 and the LED 260 are both connected onto the substrate 110.

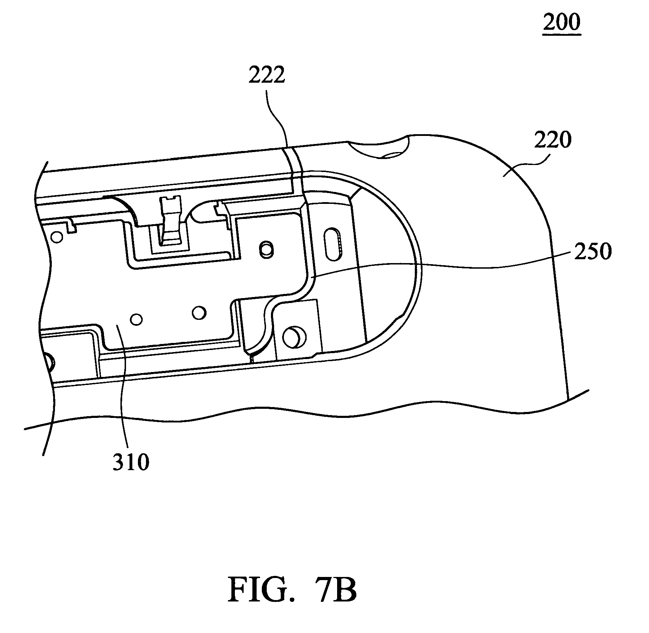

FIG. 7B is a diagram for illustrating the internal structure of the mobile device 200 according to an example. As shown in FIG. 7B, the plastic carrier 310 may have an irregular shape, and partially cover the transparent nonconductive structure 250. The plastic carrier 310 can support and fix objects thereon, such as the antenna FPCB 320 or the radiating branch 310.

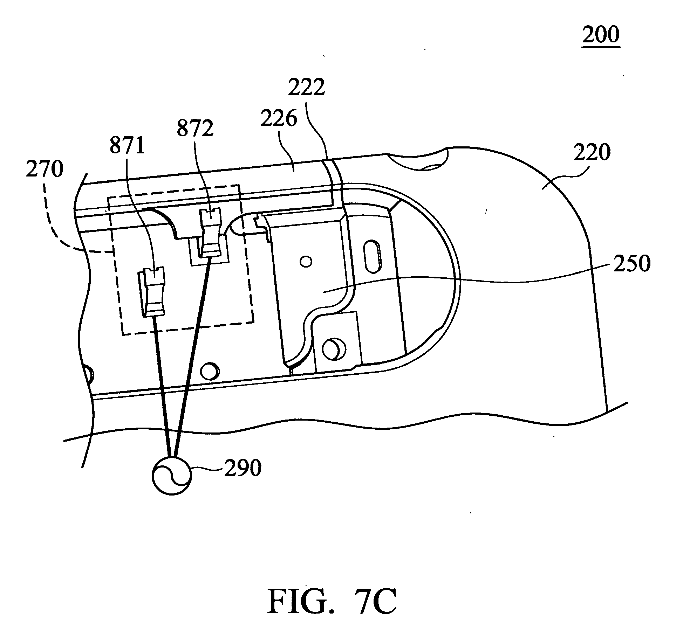

FIG. 7C is a diagram for illustrating the internal structure of the mobile device 200 according to an example. As shown in FIG. 7C, the parallel feeding element 270 may comprise two metal springs 871 and 872, wherein a signal is fed through the metal spring 871 into the radiating branch 130 (not shown), and the signal is also fed through the metal spring 872 into the ground branch 226 of the ground element 220. In the example, the metal springs 871 and 872 may have different lengths.

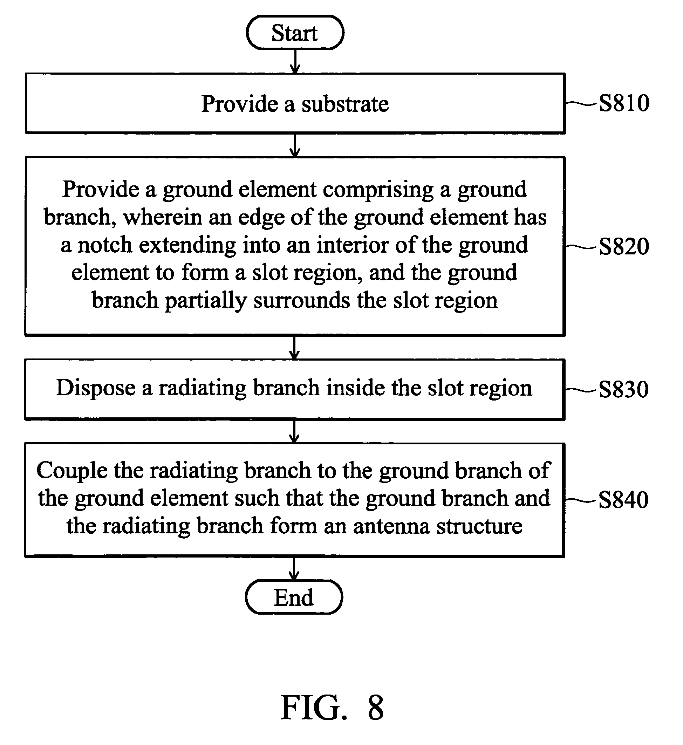

FIG. 8 is a flowchart for illustrating a manufacturing method for producing an antenna and a mobile device according to an embodiment of the invention. To begin, in step S810, a substrate is provided. In step S820, a ground element comprising a ground branch is provided, wherein an edge of the ground element has a notch extending into the interior of the ground element to form a slot region, and the ground branch partially surrounds the slot region. In step S830, a radiating branch is disposed inside the slot region. Finally, in step S840, the radiating branch is coupled to the ground branch of the ground element such that the ground branch and the radiating branch form an antenna structure. Other features of the manufacturing method are similar to those of the mobile device as described above. All embodiments in FIGS. 1-7C may be applied to the manufacturing method.

The subject application provides a mobile device comprising an antenna structure for operation in multiple frequency bands. A power button and a signal line of the mobile device are disposed substantially along a resonant path of the antenna structure so as to avoid interference with radiation of the antenna structure. A ground element of the mobile device is implemented by a conductive housing so as to improve communication quality of the mobile device. In addition, a parallel feeding element is designed to save from taking up too much internal space in the mobile device.

## Claims

1. A manufacturing method for producing an antenna and a mobile device, comprising the sequential steps of:
providing (S810) a substrate;
providing (S820) a ground element comprising a ground branch, wherein an edge of the ground element has a notch extending into an interior of the ground element to form a slot region, and the ground branch partially surrounds the slot region;
disposing (S830) a radiating branch inside the slot region; and
coupling (S840) the radiating branch to the ground branch of the ground element such that the ground branch and the radiating branch form an antenna structure.

2. The manufacturing method as claimed in claim 1, further comprising:
providing a power button close to the ground branch;
providing an FPCB (Flexible Printed Circuit Board); and
disposing a signal line on the FPCB, wherein the signal line is coupled between the power button and the substrate, and the signal line and the FPCB substantially extend along the ground branch.

3. The manufacturing method as claimed in claim 1, further comprising:
providing a transparent nonconductive structure which is partially embedded into the notch of the ground element so as to separate the ground element from an open end of the ground branch; and
disposing an LED (Light Emitting Diode) on the substrate, wherein the LED generates light through the transparent nonconductive structure.

4. The manufacturing method as claimed in claim 1, further comprising:
providing a parallel feeding element, wherein a signal source is coupled through the parallel feeding element to the ground branch and to the radiating branch, respectively.

5. The manufacturing method as claimed in claim 1, further comprising:
disposing a plastic carrier on the substrate;
disposing an antenna FPCB (Flexible Printed Circuit Board) on the plastic carrier; and
disposing the radiating branch on the antenna FPCB.

6. The manufacturing method as claimed in claim 1, further comprising:
disposing a plastic carrier on the substrate; and
coating the radiating branch on the plastic carrier.

7. The manufacturing method as claimed in claim 1, further comprising:
disposing the radiating branch on the substrate.

## Patentansprüche

1. Ein Herstellungsverfahren zum Anfertigen einer Antenne und einer mobilen Vorrichtung, das die folgenden aufeinanderfolgenden Schritte beinhaltet:
Bereitstellen (S81 0) eines Trägermaterials;
Bereitstellen (S820) eines Masseelements, beinhaltend einen Massearm, wobei eine Kante des Masseelements eine Aussparung, die sich in einen Innenraum des Masseelements erstreckt, aufweist, um einen Schlitzbereich zu bilden, und der Massearm den Schlitzbereich teilweise umgibt;
Anordnen (S830) eines Strahlungsarms innerhalb des Schlitzbereichs; und
Koppeln (S840) des Strahlungsarms mit dem Massearm des Masseelements, so dass der Massearm und der Strahlungsarm eine Antennenstruktur bilden.

2. Herstellungsverfahren gemäß Anspruch 1, das ferner Folgendes beinhaltet:
Bereitstellen eines An-/Aus-Schalters nahe dem Massearm;
Bereitstellen einer FPBC (flexible gedruckte Leiterplatte); und
Anordnen einer Signalleitung auf der FPCB, wobei die Signalleitung zwischen dem An-/Aus-Schalter und dem Trägermaterial gekoppelt ist, und sich die Signalleitung und die FPCB im Wesentlichen entlang dem Massearm erstrecken.

3. Herstellungsverfahren gemäß Anspruch 1, das ferner Folgendes beinhaltet:
Bereitstellen einer durchsichtigen, nicht leitenden Struktur, die teilweise in die Aussparung des Masseelements eingebettet ist, um das Masseelement von einem offenen Ende des Massearms zu trennen; und
Anordnen einer LED (lichtemittierenden Diode) auf dem Trägermaterial, wobei die LED Licht durch die durchsichtige, nicht leitende Struktur erzeugt.

4. Herstellungsverfahren gemäß Anspruch 1, das ferner Folgendes beinhaltet:
Bereitstellen eines Paralleleinspeisungselements, wobei eine Signalquelle durch das Paralleleinspeisungselement an den Massearm bzw. den Strahlungsarm gekoppelt ist.

5. Herstellungsverfahren gemäß Anspruch 1, das ferner Folgendes beinhaltet:
Anordnen eines Kunststoffträgers auf dem Trägermaterial;
Anordnen einer FPCB (flexiblen gedruckten Leiterplatte) der Antenne auf dem Ku nststoffträger;
und
Anordnen des Strahlungarms auf der FPCB der Antenne.

6. Herstellungsverfahren gemäß Anspruch 1, das ferner Folgendes beinhaltet:
Anordnen eines Kunststoffträgers auf dem Trägermaterial; und
Beschichten des Strahlungsarms auf dem Kunststoffträger.

7. Herstellungsverfahren gemäß Anspruch 1, das ferner Folgendes beinhaltet:
Anordnen des Strahlungsarms auf dem Trägermaterial.

## Revendications

1. Un procédé de fabrication pour produire une antenne et un dispositif mobile, comprenant les étapes séquentielles consistant à :
fournir (S810) un substrat ;
fournir (S820) un élément à la terre comprenant une branche à la terre, un bord de l'élément à la terre ayant une encoche s'étendant dans un intérieur de l'élément à la terre pour former une région de fente, et la branche à la terre entourant partiellement la région de fente ;
déposer (S830) une branche rayonnante à l'intérieur de la région de fente ; et
coupler (S840) la branche rayonnante à la branche à la terre de l'élément à la terre de telle sorte que la branche à la terre et la branche rayonnante forment une structure d'antenne.

2. Le procédé de fabrication tel que revendiqué dans la revendication 1, comprenant en sus le fait :
de fournir un bouton de mise sous tension proche de la branche à la terre ;
de fournir un FPCB (circuit imprimé souple) ; et
de disposer une ligne de signaux sur le FPCB, la ligne de signaux étant couplée entre le bouton de mise sous tension et le substrat, et la ligne de signaux et le FPCB s'étendant substantiellement le long de la branche à la terre.

3. Le procédé de fabrication tel que revendiqué dans la revendication 1, comprenant en sus le fait :
de fournir une structure transparente non conductrice qui est partiellement intégrée dans la fente de l'élément à la terre afin de séparer l'élément à la terre d'une extrémité ouverte de la branche à la terre ; et
de disposer une DEL (diode électroluminescente) sur le substrat, la DEL générant de la lumière à travers la structure transparente non conductrice.

4. Le procédé de fabrication tel que revendiqué dans la revendication 1, comprenant en sus le fait :
de fournir un élément d'alimentation parallèle, dans lequel une source de signaux est couplée par le biais de l'élément d'alimentation parallèle à la branche à la terre et à la branche rayonnante, respectivement.

5. Le procédé de fabrication tel que revendiqué dans la revendication 1, comprenant en sus le fait :
de disposer un support en plastique sur le substrat ;
de disposer une antenne FPCB (circuit imprimé souple) sur le support en plastique ; et
de disposer la branche rayonnante sur l'antenne FPCB.

6. Le procédé de fabrication tel que revendiqué dans la revendication 1, comprenant en sus le fait :
de disposer un support en plastique sur le substrat ; et
d'étaler la branche rayonnante sur le support en plastique.

7. Le procédé de fabrication tel que revendiqué dans la revendication 1, comprenant en sus le fait :
de disposer la branche rayonnante sur le substrat.
